# FASCICULE DE BREVET EUROPEEN

(11) **EP 1 110 131 B1**
(45) Date de publication et mention de la délivrance du brevet: **29.09.2004**
(21) Numéro de dépôt: 00949628.2
(22) Date de dépôt: 04.07.2000
(51) Int. Cl.: G05D 1/04

(54) **PROCEDE ET SYSTEME DE GESTION D'ALTITUDE POUR AERODYNE UTILISANT LA CAPTURE AUTOMATIQUE D'UNE ALTITUDE BAROMETRIQUE OU D'UNE HAUTEUR RADIOSONDE**
VERFAHREN UND VORRICHTUNG ZUM STEUERN DER FLUGHÖHE EINES FLUGZEUGES MIT AUTOMATISCHEM WECHSEL ZWISCHEN DRUCKHÖHE UND RADARHÖHE
METHOD AND SYSTEM FOR CONTROLLING AIRCRAFT ALTITUDE USING AUTOMATIC SWITCHING BETWEEN PRESSURE ALTITUDE AND RADIO ALTITUDE

(30) Priorité: 09.07.1999 FR 9908956
(43) Date de publication de la demande: 27.06.2001
(73) Titulaire: THALES AVIONICS S.A., 78141 Vélizy Villacoublay Cédex (FR)
(72) Inventeur: MAGGI, Michel, Thomson-CSF Propriété Intell., 94117 Arcueil Cédex (FR); INGLESE, Fabien, Thomson-CSF Propriété Intell., 94117 Arcueil Cédex (FR)
(74) Mandataire: Esselin, Sophie
(86) Numéro de dépôt international: PCT/FR2000/001913
(87) Numéro de publication internationale: WO 2001/004713

(56) Documents cités:
- US-A- 3 092 356
- US-A- 3 936 797
- US-A- 4 828 382
- US-A- 5 585 791

## Description

La présente invention concerne un procédé et un système de gestion d'altitude pour aérodynes (avions, hélicoptères...) adapté aussi bien à une phase dite de croisière lorsque l'aérodyne survole à haute altitude un relief, qu'à une phase dite tactique lorsque l'aérodyne cherche à faire de la surveillance à basse altitude notamment lors d'opérations de patrouille maritime (dans la suite de la description on parlera le plus souvent d'avion). En effet lors d'une reconnaissance maritime les avions sont amenés typiquement à voler à des hauteurs pouvant être inférieures à 200 pieds de manière à échapper à la surveillance radar.

Actuellement les avions sont équipés de différents types de capteurs d'altitude adaptés aux altitudes auxquelles se trouvent lesdits avions.

Typiquement, pour mesurer des altitudes de croisière de l'ordre de plusieurs milliers de pieds typiquement entre 4 000 et 40 000 pieds le capteur d'altitude est un capteur barométrique qui à partir d'une mesure de pression et de corrections atmosphériques fournit une altitude mesurée à partir du niveau de la mer. Lorsque au contraire on cherche à mesurer des altitudes beaucoup plus faibles de l'ordre de quelques centaines de pieds on utilise des radiosondes très précises qui fournissent une hauteur séparant l'avion, du relief survolé. Il existe notamment des procédés de tenue d'altitude tels que décrits dans le brevet US 3 092 356 fonctionnant avec mesure d'une altitude barométrique ou d'une hauteur radiosonde, ou bien encore des procédés de déclenchement d'alarme de collision avec le sol, utilisant des mesures précises de hauteur radiosonde et d'altitude barométrique telles que décrites dans le brevet US 5 585 791. Le contexte de l'invention est différent et concerne la capture automatique d'altitude barométrique ou radio.

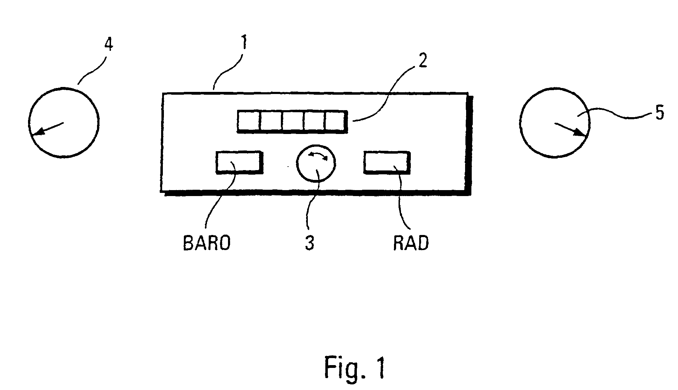

De manière générale l'avion est équipé d'un système de pilotage automatique, qui à partir d'une altitude de consigne donnée, adapte l'altitude d'évolution de l'avion pour atteindre ladite altitude de consigne. A haute altitude, l'altitude de consigne est une altitude barométrique, à basse altitude, l'altitude de consigne est une hauteur radiosonde. Dans la phase de transition en deçà d'une certaine altitude pour des raisons de sécurité, on n'utilise plus l'altitude barométrique de consigne, le pilote doit alors intervenir pour manuellement passer d'un mode dit barométrique à un mode dit radiosonde pour pouvoir afficher une altitude de consigne radiosonde. La figure 1 représente schématiquement un poste de commande et d'affichage pour la planche de bord d'un avion équipé d'un système de gestion d'altitude selon l'art connu. Une partie 1 de la planche de bord concerne l'altitude de consigne affichée sur un afficheur 2, l'altitude de consigne pouvant être réglée grâce à des moyens de sélection 3 de type organe rotatif ou molette que le pilote peut tourner. Deux boutons BARO et RAD permettent au pilote de sélectionner une altitude de consigne respectivement de type barométrique ou de type radiosonde, appelé ci-après mode BARO et mode RAD. Par ailleurs, un indicateur d'altitude barométrique 4 et un indicateur d'altitude radiosonde 5 fournissent les indications d'altitude obtenues respectivement par des capteurs barométrique et radiosonde.

Actuellement lors d'opérations tactiques de patrouille appelées mode tactique, pour assurer un maximum de sécurité la commande d'affichage d'altitude ne peut plus être effectuée en mode BARO et doit impérativement être effectuée en mode RAD en deçà d'une altitude seuil ALT seuil. Le pilote doit donc déclencher le mode RAD à l'aide du bouton RAD pour pouvoir afficher une altitude de consigne inférieure à l'altitude seuil. Typiquement cette altitude seuil est située aux alentours de 4 000 à 5 000 pieds.

Pour pallier le problème de l'intervention manuelle du pilote dans la zone de transition, l'invention propose un procédé de gestion d'altitude utilisant le passage automatique de la capture d'une altitude barométrique à la capture d'une altitude radiosonde et réciproquement.

Plus précisément l'invention a pour objet un procédé de gestion d'altitude d'un aérodyne consistant notamment :
- à sélectionner et afficher une altitude de consigne ;
- à acquérir l'altitude d'évolution de l'aérodyne à partir notamment de premiers moyens de mesure barométrique correspondant à un mode barométrique et de seconds moyens de mesure radiosonde correspondant à un mode radiosonde ;
- à amener l'altitude d'évolution de l'aérodyne à l'altitude de consigne correspondant à une étape de capture d'altitude automatique,
caractérisé en ce qu'il consiste en outre à basculer l'altitude de consigne du mode barométrique vers le mode radiosonde ou du mode radiosonde vers le mode barométrique lorsque ladite altitude de consigne est inférieure ou respectivement supérieure à une altitude seuil, définie à partir d'une altitude barométrique.

Avantageusement le procédé selon l'invention peut prévoir de basculer l'altitude de consigne du mode radiosonde vers le mode barométrique lorsque l'altitude de consigne est inférieure à l'altitude seuil définie en mode radiosonde. En effet dans certains contextes il peut être important de régler l'altitude d'un avion par rapport à celle d'un autre avion et ce de manière absolue sans mesure d'altitude relative par radiosonde par rapport à un obstacle survolé. Ainsi même à basse altitude en mode radiosonde, il est possible de retourner en mode barométrique. De même dans certaines missions tactiques on peut chercher à effectuer une mesure radiosonde au-delà de la valeur altitude seuil (néanmoins dans des limites acceptables pour lesquelles la hauteur radiosonde est encore fiable) et donc basculer d'un mode BARO à un mode RAD.

L'invention a aussi pour objet un système de gestion d'altitude d'un aérodyne recevant au moins une altitude d'évolution en mode barométrique à partir d'au moins un capteur d'altitude barométrique ou au moins une altitude d'évolution en mode radiosonde à partir d'au moins un capteur d'altitude radiosonde, comportant des moyens pour sélectionner une altitude de consigne, des moyens pour afficher ladite altitude de consigne des moyens pour faire converger l'altitude d'évolution barométrique ou radiosonde vers l'altitude de consigne caractérisé en ce qu'il comprend des moyens pour basculer l'altitude de consigne d'un mode barométrique vers un mode radiosonde ou d'un mode radiosonde vers un mode barométrique lorsque l'altitude de consigne est inférieure ou respectivement supérieure à une altitude seuil.

Les moyens pour faire converger l'altitude d'évolution vers l'altitude de consigne peuvent comprendre des moyens de type réglage automatique de la vitesse verticale de l'avion ou de type réglage automatique du « level change » mode dans lequel la commande de profondeur (manche) contrôle la vitesse aérodynamique de l'avion et la commande de gaz (manette) contrôle la poussée préconisée pour la montée ou la descente.

Le système de gestion d'altitude peut également avantageusement comprendre des moyens de tenue d'altitude lorsque l'altitude d'évolution est égale à l'altitude de consigne.

L'invention sera mieux comprise et d'autres avantages apparaîtront à la lecture de la description qui va suivre donnée à titre non limitatif et grâce aux figures annexées parmi lesquelles :
La Figure 1 représente schématiquement un exemple de poste de commande et d'affichage pour la planche de bord d'un avion, selon l'art connu.

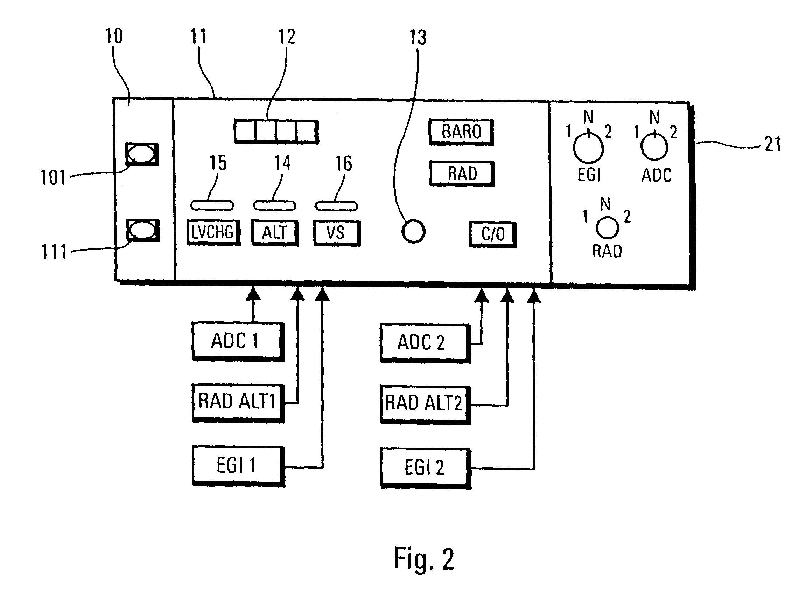

La Figure 2 représente schématiquement un exemple de poste de commande et d'affichage pour la planche de bord d'un avion équipé d'un système de gestion d'altitude selon l'invention. Les entrées/sorties du système de gestion sont matérialisées.
La Figure 3 illustre les différentes transitions possibles dans un système de gestion d'altitude selon l'invention.

La face avant comporte une première partie 10 permettant de sélectionner le type de mission, commande 101 mission dite de croisière, commande 111 en mission dite tactique. En mission de croisière l'altitude est une altitude toujours barométrique, en mission tactique l'altitude varie d'un mode barométrique à un mode radiosonde et réciproquement.

Il est à noter qu'en mission de croisière l'altitude barométrique minimale indiquée est de 0 pied, en mission tactique l'altitude barométrique minimale peut typiquement être fixée à 1 500 pieds et l'altitude radiosonde minimale fixée à 50 pieds.

La face avant du poste comporte une seconde partie 11 relative à la commande du système de gestion d'altitude en mission tactique. Des moyens 13 permettent de régler une altitude de consigne dont la valeur est affichée sur un afficheur 12. Cet afficheur de préférence à consommation de courant peut être par exemple à filament ou à diodes électroluminescentes. Les moyens de réglage 13 peuvent être de manière classique un organe rotatif ou molette que le pilote peut tourner. Lorsque l'altitude de consigne est supérieure à une valeur seuil prédéterminée typiquement égale à 4 000 pieds, l'altitude de consigne est une altitude en mode barométrique et un voyant appelé BARO devient lumineux pour indiquer au pilote que l'altitude de consigne est une altitude barométrique. Inversement lorsque l'altitude de consigne est inférieure à l'altitude seuil de 4 000 pieds, un voyant appelé RAD devient lumineux pour indiquer au pilote que l'altitude de consigne est une altitude radiosonde. La seconde partie 11 comprend également différents boutons relatifs aux consignes automatiques de vol. Un premier bouton ALT est relatif à une commande de tenue d'altitude lorsque l'altitude d'évolution a atteint l'altitude de consigne, le mode tenue d'altitude s'enclenche automatiquement et un voyant lumineux 14 situé au-dessus du bouton ALT s'illumine. Par ailleurs, il est possible à tout moment de capturer à la volée l'altitude actuelle de l'avion en pressant le bouton ALT. De part et d'autre du bouton ALT, sont situés un bouton LVL CHG et un bouton VS relatif respectivement à des modes de capture automatique d'altitude par réglage de la vitesse de l'avion pleine puissance des gaz de l'avion (en montée) ou réduite en descente ou par réglage de la vitesse de l'avion en ajustant la puissance des gaz tout en contrôlant la vitesse verticale (VS).

Au-dessus de chacun de ces boutons, des voyants lumineux indiquent lequel des modes est enclenché.

Lorsque l'altitude de consigne est pratiquement atteinte les voyants lumineux 15 ou 16 s'éteignent et le voyant 14 s'allume indiquant qu'on rentre en régime de tenue d'altitude.

La partie 11 comporte également un bouton C/O permettant de basculer manuellement d'un mode radiosonde à un mode barométrique lorsque l'altitude d'évolution de l'avion est en dessous de l'altitude seuil radiosonde imposée (en l'occurrence 4 000 pieds) l'altitude radiosonde donnée au-dessus de la mer est obtenue avec une grande précision, néanmoins dans certains cas de figures on peut imposer à l'avion de tenir une altitude dite absolue et notamment par rapport à l'altitude tenue par d'autres avions. Manuellement le pilote peut à tout instant rebasculer en mode radiosonde en réappuyant sur le bouton C/O si les conditions sont réunies (validité des informations).

La face avant du poste comporte une troisième partie 21 de commande concernant les différents capteurs de données fournies au pilote.

En effet pour des raisons de sécurité maximale les données inertielles, de vitesse, d'altitude etc... sont systématiquement doublées pour être comparées, en cas d'écart le système de pilotage automatique peut s'interrompre, le pilote doit alors reprendre manuellement la commande de l'avion. Cependant dans certaines conditions il est possible de maintenir le pilotage automatique malgré la défaillance de l'un des capteurs parmi les deux capteurs d'altitude barométrique et les deux capteurs d'altitude radiosonde, et ce, pour ne pas interrompre la mission.

Les informations fournies par chacun de ces capteurs sont en permanence portées à la connaissance du pilote. En cas de défaillance de l'un de ces capteurs, le pilote peut décider de ne faire la mesure qu'avec un seul capteur de même type que celui défaillant (capteur barométrique ou capteur radiosonde). C'est pourquoi en fonctionnement normal doublé, de chaque type de capteur, les boutons EGI, ADC et RADALT relatifs respectivement au capteur de centrale inertielle, de capteurs barométriques et de capteur radiosonde, sont en position N(normale). En cas de défaillance signalée au pilote de l'un desdits capteurs, le pilote bascule manuellement un bouton en position 1 ou 2, de manière à court-circuiter le capteur défaillant, le calculateur du pilotage automatique peut ainsi continuer à faire fonctionner le pilotage automatique, (avec un niveau de sécurité réduit mais connu de l'équipage).

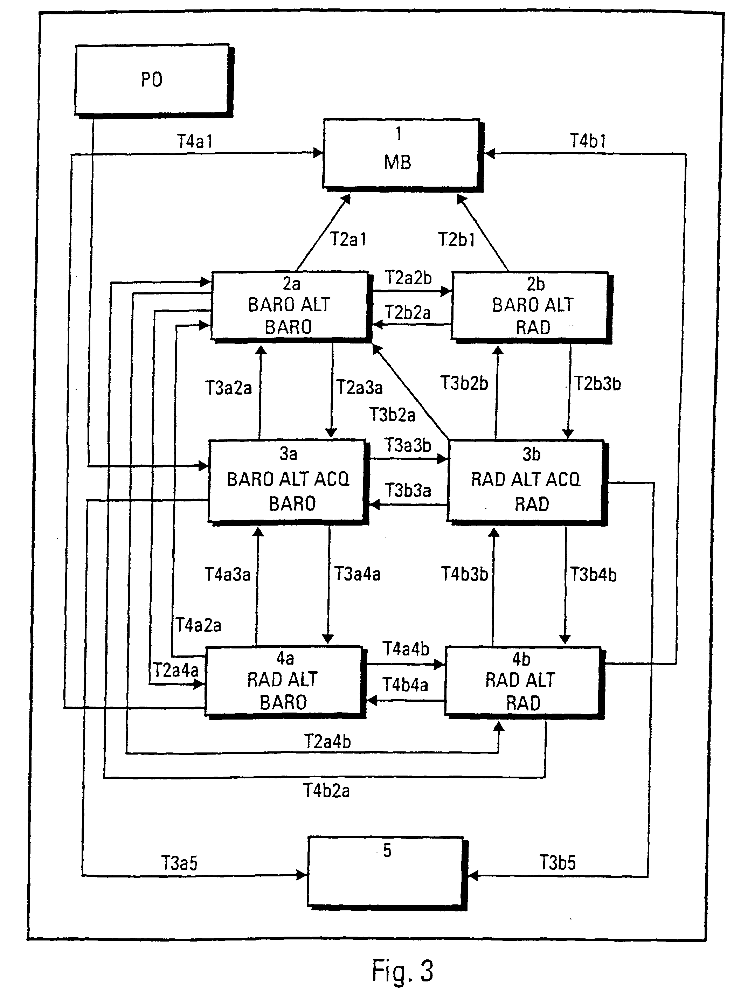

Le système de l'invention est décrit ci-après plus en détails à l'aide du synopsis de la Figure 3 qui illustre l'ensemble des transitions possibles entre les différents modes en fonctionnement du pilotage automatique, les différents modes étant définis de la manière suivante :
- mode MB : mode basique de pilotage dans des conditions standard : tenue d'assiette;
- mode BARO ALT ou RAD ALT : mode de tenue d'altitude lorsqu'une altitude de consigne est atteinte, qu'il s'agisse d'une altitude barométrique ou radiosonde ; la capture de l'altitude (ou de la hauteur) actuelle est par ailleurs possible en pressant le bouton ALT ;
- mode BARO ALT ACQ ou RAD ALT ACQ : mode de capture d'altitude pour atteindre une altitude de consigne.

Les indications BARO ou RAD étant relatives à l'affichage des altitudes de consigne et donc du type de capteur sélectionné (barométrique ou radiosonde). Les transitions T_{2a 1} ou T_{2b 1} correspondent aux cas de figure dans lesquelles à partir d'un état de tenue d'altitude, une défaillance au niveau des capteurs de données inertielles, barométrique, radiosonde apparaît et fait automatiquement basculer le pilotage automatique dans le mode de pilotage basique.

La transition T_{2a 2b} correspond au cas de figure dans lequel la commande C/0 a été actionnée à partir d'un mode BARO, on donne la possibilité de basculer en mode RAD pour une altitude supérieure à 4 000 pieds, mais dans une phase tactique pour laquelle on cherche à positionner l'avion par rapport à une hauteur survolée avec une altitude affichée inférieure à 4 000 pieds.
- La transition T_{2b 2a} correspond à la situation dans laquelle, à une altitude inférieure à 4 000 pieds et grâce à la commande C/O on bascule d'un mode RAD à un mode BARO pour lequel l'altitude minimale de consigne sera de 1 500 pieds (en tactique). Cette commutation s'opère aussi en cas de panne du radioaltimètre.
- Les transitions T_{2a 3a} et T_{2b 3b} correspondent respectivement à des situations de capture d'altitude à partir d'une tenue d'altitude dans une gamme d'altitude supérieure à 4 000 pieds et respectivement inférieure à 4 000 pieds.
- La transition T_{2a 4a} correspond à une situation dans laquelle la commande C/O est actionnée, en phase de mission tactique pour une consigne supérieure à 4 000 pieds.
- La transition T_{2a 4b} correspond à une situation dans laquelle grâce à la commande C/O on passe d'une tenue d'altitude barométrique en mode barométrique à une tenue d'altitude radiosonde en mode radiosonde. Dans ce cas la consigne est inférieure à 4 000 pieds.
- La transition T_{3a 2a} permet de passer d'un mode de capture d'altitude à un mode de tenue d'altitude et ce pour des altitudes de consigne et d'évolution supérieures à 4 000 pieds.
- La transition T_{3b 2b} permet de passer d'un mode de capture d'altitude à un mode de tenue d'altitude et ce pour des altitudes de consigne et d'évolution inférieures à 4 000 pieds.
- La transition T_{3b 2a} correspond à une panne de capteur radiosonde.
- La transition T_{3a 3b} correspond à un changement de mode, grâce à la commande C/O, typiquement au passage d'un mode de tenue d'altitude élevée supérieure à 4 000 pieds en mode BARO, à un mode de capture de hauteur radiosonde avec une altitude de consigne affichée en mode RAD correspondant à une « pénétration » en mode tactique.
- La transition T_{3b 3a} correspond à la transition réciproque de la transition T_{3a 3b}.
- La transition T_{3a 4a} correspond au passage d'un mode de capture d'altitude à un mode de tenue d'altitude pour une altitude inférieure ou égale à 4 000 pieds. (Typiquement une altitude de consigne de 10 000 pieds affichée en mode BARO, avec un pallier momentané de tenue d'altitude de 3 500 pieds).
- La transition T_{3b 4b} correspond lors d'une phase de capture d'altitude en mode RAD à une tenue d'altitude en mode RAD.
- La transition T_{3a 5} correspond à une panne d'un capteur nécessaire à une capture d'altitude barométrique ou à une capture d'altitude radiosonde (transition T_{3b 5})·
- Les transitions T_{4a 1} et T_{4b 1} correspondent à des cas de panne d'un capteur nécessaire à une tenue d'altitude barométrique ou radiosonde.
- Les transitions T_{4a 3a} et T_{4b 3b} sont les transitions dans lesquelles on quitte un mode de tenue d'altitude pour une capture d'altitude.
- Les transitions T_{4a 4b} ou T_{4b 4a} correspondent à une situation dans laquelle la commande C/O est actionnée en phase de mission tactique pour passer d'un mode BARO à un mode RAD, en phase de tenue d'altitude.

## Revendications

1. Système de gestion d'altitude d'un aérodyne recevant au moins une altitude d'évolution en mode barométrique à partir d'au moins un capteur d'altitude barométrique ou au moins une altitude d'évolution en mode radiosonde à partir d'au moins un capteur d'altitude radiosonde, comportant des moyens pour sélectionner une altitude de consigne, des moyens pour afficher ladite altitude de consigne, des moyens pour faire converger l'altitude d'évolution barométrique ou radiosonde vers l'altitude de consigne **caractérisé en ce qu'**il comprend des moyens pour basculer l'altitude de consigne d'un mode barométrique vers un mode radiosonde ou d'un mode radiosonde vers un mode barométrique lorsque l'altitude de consigne est inférieure ou respectivement supérieure à une altitude seuil définie en mode radiosonde.

2. Système de gestion d'altitude selon la revendication 1, **caractérisé en ce qu'**il comprend en outre des moyens pour basculer l'altitude de consigne du mode radiosonde vers le mode barométrique, lorsque l'altitude de consigne est inférieure à l'altitude seuil définie.

3. Système de gestion d'altitude selon l'une des revendications 1 ou 2, **caractérisé en ce qu'**il comprend en outre des moyens d'affichage du mode barométrique ou du mode radiosonde dans lequel est affichée l'altitude de consigne.

4. Système de gestion d'altitude selon l'une des revendications 1 à 3, **caractérisé en ce qu'**il comprend également des moyens de tenue d'altitude lorsque l'altitude d'évolution a atteint l'altitude de consigne.

5. Système de gestion d'altitude selon l'une des revendications 1 à 4, **caractérisé en ce que** les moyens pour faire converger l'altitude d'évolution vers l'altitude de consigne comprennent des moyens pour régler automatiquement la vitesse verticale de l'aéronef (VS).

6. Système de gestion d'altitude selon l'une des revendications 1 à 4, **caractérisé en ce que** les moyens pour faire converger l'altitude d'évolution vers l'altitude de consigne comprennent une commande de profondeur contrôlant la vitesse aérodynamique de l'aérodyne et une commande de gaz contrôlant la poussée nécessaire à la montée ou à la descente de l'aérodyne.

7. Système de gestion d'altitude selon l'une des revendications 1à 6, **caractérisé en ce qu'**il comprend l'acquisition de données inertielles de type vitesse verticale, vitesse angulaire, accélération.

8. Système de gestion d'altitude selon l'une des revendications 1 à 7, **caractérisé en ce que** l'altitude seuil est de l'ordre de 4 000 pieds.

9. Système de gestion d'altitude selon l'une des revendications 1 à 8, **caractérisé en ce que** l'altitude de consigne est supérieure à environ 1 500 pieds en mode barométrique et supérieure à environ 50 pieds en mode radiosonde.

## Patentansprüche

1. System zur Steuerung der Flughöhe eines Flugzeugs, das zumindest die Istflughöhe im Luftdruckmodus von einem Luftdruckhöhenaufnehmer oder zumindest eine Istflughöhe im Radarmodus von zumindest einem Radarhöhenaufnehmer empfängt, mit Mitteln zum Auswählen einer Sollflughöhe, Mitteln zum Anzeigen der Sollflughöhe, Mitteln zum Heranführen der Luftdruck- oder der Radaristflughöhe an die Sollflughöhe, **dadurch gekennzeichnet, dass** es Mittel umfasst, um die Sollflughöhe von einem Luftdruckmodus in einen Radarmodus oder von einem Radarmodus in einen Luftdruckmodus umzuschalten, wenn die Sollflughöhe kleiner als beziehungsweise größer als ein definierter Flughöhengrenzwert im Radarmodus ist.

2. System zur Flughöhensteuerung nach Anspruch 1, **dadurch gekennzeichnet, dass** sie außerdem Mittel umfasst, um die Sollflughöhe vom Radarmodus auf den Luftdruckmodus umzuschalten, wenn die Sollflughöhe kleiner als der definierte Flughöhengrenzwert ist.

3. System zur Flughöhensteuerung nach Anspruch 1 oder 2, **dadurch gekennzeichnet, dass** es außerdem Mittel zur Anzeige des Luftdruckmodus oder des Radarmodus umfasst, in dem die Sollflughöhe angezeigt wird.

4. System zur Flughöhensteuerung nach einem der Ansprüche 1 bis 3, **dadurch gekennzeichnet, dass** es ebenso Mittel zum Halten der Flughöhe umfasst, wenn die Istflughöhe die Sollflughöhe erreicht hat.

5. System zur Flughöhensteuerung nach einem der Ansprüche 1 bis 4, **dadurch gekennzeichnet, dass** die Mittel zum Heranführen der Istflughöhe an die Sollflughöhe Mittel umfassen, um die Vertikalgeschwindigkeit des Flugzeugs (VS) automatisch einzustellen.

6. System zur Flughöhensteuerung nach einem der Ansprüche 1 bis 4, **dadurch gekennzeichnet, dass** die Mittel zum Heranführen der Istflughöhe eine Tiefensteuerung umfassen, die die aerodynamische Geschwindigkeit des Flugzeugs steuert, und eine Gassteuerung, die die zum Aufstieg oder zum Abstieg des Flugzeugs benötigte Schubkraft steuert.

7. System zur Flughöhensteuerung nach einem der Ansprüche 1 bis 6, **dadurch gekennzeichnet, dass** es das Erwerben von Inertialdaten vom Typ einer Vertikalgeschwindigkeit, einer Winkelgeschwindigkeit und einer Beschleunigung umfasst.

8. System zur Flughöhensteuerung nach einem der Ansprüche 1 bis 7, **dadurch gekennzeichnet, dass** der Flughöhengrenzwert in der Größenordnung von 4000 Fuß liegt.

9. System zur Flughöhensteuerung nach einem der Ansprüche 1 bis 8, **dadurch gekennzeichnet, dass** der Flughöhensollwert größer als etwa 1500 Fuß im Luftdruckmodus und größer als etwa 50 Fuß im Radarmodus ist.

## Claims

1. System for managing the altitude of an aerodyne receiving at least one changing altitude in barometric mode from at least one barometric altitude sensor or at least one changing altitude in radioprobe mode from at least one radioprobe altitude sensor, comprising means for selecting a preset altitude, means for displaying the said preset altitude, means for making the barometric or radioprobe changing altitude converge towards the preset altitude, **characterized in that** it comprises means for toggling the preset altitude from a barometric mode to a radioprobe mode or from a radioprobe mode to a barometric mode when the preset altitude is below or respectively above a threshold altitude defined in radioprobe mode.

2. System for managing altitude according to Claim 1, **characterized in that** it furthermore comprises means for toggling the preset altitude from the radioprobe mode to the barometric mode, when the preset altitude is below the defined threshold altitude.

3. System for managing altitude according to one of Claims 1 or 2, **characterized in that** it furthermore comprises means for displaying the barometric mode or the radioprobe mode in which the preset altitude is displayed.

4. System for managing altitude according to one of Claims 1 to 3, **characterized in that** it also comprises means for holding altitude when the changing altitude has reached the preset altitude.

5. System for managing altitude according to one of Claims 1 to 4, **characterized in that** the means for making the changing altitude converge towards the preset altitude comprise means for automatically adjusting the vertical speed of the aircraft (VS).

6. System for managing altitude according to one of Claims 1 to 4, **characterized in that** the means for making the changing altitude converge towards the preset altitude comprise a depth control controlling the aerodynamic speed of the aerodyne and a gas control controlling the thrust required for the aerodyne to climb or to descend.

7. System for managing altitude according to one of Claims 1 to 6, **characterized in that** it comprises the acquisition of inertial data such as vertical speed, angular speed, acceleration.

8. System for managing altitude according to one of Claims 1 to 7, **characterized in that** the threshold altitude is of the order of 4 000 feet.

9. System for managing altitude according to one of Claims 1 to 8, **characterized in that** the preset altitude is above around 1 500 feet in barometric mode and above around 50 feet in radioprobe mode.
